(19) Europäisches Patentamt
European Patent Office
Office européen des brevets

(11) Publication number: **0 408 502 A2**

(12) # EUROPEAN PATENT APPLICATION

(21) Application number: **90810507.5**

(22) Date of filing: **05.07.90**

(30) Priority: **11.07.89 US 377981**
**08.12.89 US 447979**

(43) Date of publication of application:
**16.01.91 Bulletin 91/03**

(84) Designated Contracting States:
**AT BE CH DE DK ES FR GB GR IT LI LU NL SE**

(51) Int. Cl.5: **C08L 3/02**, //(C08L3/02,1:16, 3:06)

(71) Applicant: **WARNER-LAMBERT COMPANY**
**201 Tabor Road**
**Morris Plains New Jersey 07950(US)**

(72) Inventor: **Sachetto, Jean-Pierre, Dr.**
**Düchelweiher 13**
**CH-4144 Arlesheim(CH)**
Inventor: **Silbiger, Jakob, Dr.**
**Oberwilerstrasse 72**
**CH-4054 Basel(CH)**
Inventor: **Lentz, David John, Dr.**
**23 Timber Lane**
**Randolph, N.J. 07869(CH)**

(74) Representative: **Silbiger, Jakob, Dr.**
**c/o CAPSUGEL AG Fabrikmattenweg 2-4**
**CH-4144 Arlesheim(CH)**

(54) **Polymer base blend compositions containing destructurized starch.**

(57) A composition of matter capable of being formed into articles having substantial dimensional stability comprising

a) destructurized starch, and

b) at least one compound selected from the group consisting of anionically modified polysaccharides; said modified polysaccharide being present in an amount effective to enhance the physical properties of said articles.

The composition may contain further conventional additives as well as hydrophobic, substantially water-insoluble polymers.

EP 0 408 502 A2

# POLYMER BASE BLEND COMPOSITIONS CONTAINING DESTRUCTURIZED STARCH

The present invention relates to polymer compositions capable of being formed by heat and pressure into articles having dimensional stability and enhanced physical properties, and to pre-mixes useful for preparing these compositions. These compositions and pre-mixes comprise destructurized starch and other polymers as described herein.

It is known that natural starch which is found in vegetable products and which contains a defined amount of water can be treated at an elevated temperature and in a closed volume, thereby at elevated pressures, to form a melt. The process is conveniently carried out in an injection molding machine or extruder. The starch is fed through the hopper onto a rotating, reciprocating screw. The feed material moves along the screw towards the tip. During this process, its temperature is increased by means of external heaters around the outside of the barrel and by the shearing action of the screw. Starting in the feed zone and continuing in the compression zone, the particulate feed becomes gradually molten. It is then conveyed through the metering zone, where homogenization of the melt occurs, to the end of the screw. The molten material at the tip can then be treated further by injection molding or extrusion or any other known technique to treat thermoplastic melts, to obtain shaped articles.

This treatment, which is described in the European Patent Application No. 84 300 940.8 (Publication No. 118 240), which patent is incorporated herein by reference, yields a substantially destructurized starch. As described in the above mentioned patent, the reason for this is that the starch is heated above the glass transition and the melting temperatures of its components. As a consequence, a melting and disordering of the molecular structure of the starch granules takes place, so that a substantially destructurized starch is obtained. The expression "destructurized starch" defines starch obtained by such thermoplastic melt formation. Reference is also made to European Patent Applications No. 88810455.1 (Publication No. 298,920), No. 88810548.4 (Publication No. 304,401) and No. 89810046.6 (Publication No. 326,517), which further describe destructurized starch, methods for making it, and uses of it. These applications are also incorporated herein by reference.

It is preferred that the destructurized starch used in the present invention has been heated to a high enough temperature and for a time long enough so that a specific endothermic transition analysis as represented by a differential scanning calometry (DSC) curve indicates that the specific relatively narrow peak just prior to oxidative and thermal degradation has disappeared, as described in the above-mentioned European Patent Application No. 89810046.6 (Publication No. 326,517).

Destructurized starch is a new and useful material for many applications. An important property is its biodegradability. In humid air, however, destructurized starch takes up water from the air, thereby increasing its moisture content. As a consequence, a shaped article made from destructurized starch may under such conditions lose its dimensional stability. On the other hand such an article may dry out in low humidity and become brittle.

Thermoplastic starch has a unique set of properties and while these are very useful, they may limit its utility in cases where a softer, more resilient or harder, tougher polymer is desired.

Thermoplastic starch as mentioned can be extruded and molded into numerous useful shapes and profiles. However, the processing parameters such as water content, temperature, and pressure are critical and must be narrowly controlled to achieve reproducible quality products. This is a further disadvantage for many applications.

To overcome these potential limitations, it would be useful to increase the dimensional stability over a wide humidity range; to increase the toughness (measured as break energy); to increase the elasticity (measured as elongation); to decrease polymer stiffness (measured as Young's modulus) and increase the hardness.

Broadening processing latitude increases the variety of shapes and composites and decreases the need for close controls. It would therefore also be useful to improve the control of the melt strength, e.g. increasing the processing latitude for extruding, injection molding, film blowing or fiber drawing and to control the surface tack and adhesion to other substrates.

Conventional thermoplastic materials are hydrophobic, substantially water-insoluble polymers are conventionally processed in the absence of water and volatile materials.. Starch to the contrary forms a melt in the presence of water but decomposes at elevated temperature, i.e. around 240°C. It was therefore expected that such a starch melt could not be used as a thermoplastic component together with hydrophobic, substantially water-insoluble polymeric materials not only because starch forms a melt in the presence of water as described above, but also because of its chemical structure and hydrophilic nature.

It has now been found that starch, when heated in a closed volume at proper moisture and temperature

conditions as described above to form a melt of destructurized starch, is substantially compatible in its processing with melts formed by hydrophobic substantially water insoluble thermoplastic polymers and that the two types of molten materials show an interesting combination of properties, especially after the melt has solidified.

One very important aspect is the surprisingly improved dimensional stability of such destructurized starch blended with such hydrophobic thermoplastic materials. Such polymer compositions are described in copending European Patent Application No. 89810078.9 (Publication No. 327,505), which is incorporated herein by reference. Although articles made from such compositions possess better dimensional stability than those made from destructurized starch alone, the physical properties of the therein-described compositions are not as good as might be desired for some end uses. In particular, it is important that articles made from destructurized starch compositions retain sufficient strength and dimensional stability to perform their desired function while still being biodegradable after disposal.

It has now been found that articles made from such destructurized starch blended with specific hydrophobic thermoplastic materials as described herein show a surprising increase in all or a part of their physical properties and behaviour of their melts as to overcome the limitations as explained above. Moreover it was surprisingly found that many of the blends described herein show a significantly improved dimensional stability in humid air compared with non-blended destructurized starch whilst retaining a surprisingly high degree of disintegration in contact with liquid water which in consequence leads to a high degree of biodegradability.

In order to achieve such properties, it has been found useful to make polymer compositions comprising: a) destructurized starch, b) at least one compound selected from the group consisting of anionically modified polysaccharides (referred to herein as "component b)"), and optionally c) a substantially water-insoluble polymer different from those defined as component b). In one aspect, the present invention relates to a composition comprising destructurized starch and component b). This composition is useful itself for making finished articles, but it is primarily useful as a "pre-mix" for combining with the substantially water-insoluble polymer. In a second aspect, the invention comprises the ternary composition of destructurized starch, component b), and at least one substantially water-insoluble polymer (component c)). These compositions may be in the form of powdery mixtures of the components, melts, or solid forms. The invention also includes methods for making and using both above - described compositions and shaped articles made therefrom.

The compositions of the first aspect of the invention comprise:

a) destructurized starch, and

b) at least one compound selected from the group consisting of anionically modified polysaccharides.

Such polymer composition may optionally contain further additives.

Specifically, the first aspect of the present invention is a polymer composition capable of being formed into articles having substantial dimensional stability comprising:

a) destructurized starch, and

b) at least one compound selected from the group consisting of anionically modified polysaccharides; said modified polysaccharide being present in an amount effective to enhance the physical properties of said articles (which amount is sometimes referred to herein as an "effective amount" of component b).

Preferably this polymer composition additionally comprises at least one component c):

c) a substantially water-insoluble thermoplastic polymer which does not fall within the definition of those compounds defined herein as component b).

The present invention includes said polymer compositions in the form of powdery mixtures of their components, in the form of melts, or in solidified form.

Component b) is chosen as described herein to be substantially compatible with the starch and also to promote the compatibility of component c) with the combination of starch and component b).

The present invention further refers to a method of producing said polymer compositions in the molten or solid form as well as a method of producing shaped articles from said polymer compositions, and to the resulting shaped articles made therefrom.

The polymer compositions of the present invention are prepared by admixing destructurized starch, component b) and optionally component c), and any further additives. This mixture is then be heated in a closed volume to elevated temperatures until a homogeneous melt is obtained, and shaped articles can be formed therefrom.

An alternate method of producing the polymer compositions of the present invention comprises: Heating starch which is in a condition to be destructurized in a closed volume to elevated temperatures and at elevated pressures for a time sufficient to destructurize the starch and form a melt; adding component b) as well as other polymer or polymers and/or additives before, during or after such starch destructurization; and

continuing to heat the mixture until a homogenous melt is obtained. It is preferred that component b) and, if desired, component c), as well as other additives be combined with the starch and the combination formed into a melt. The starch in this combination may be already wholly or partially destructurized or the destructurization may take place during melt formation.

The present invention further refers to the process of working said polymer composition under controlled water content, temperatures and pressure conditions as a thermoplastic melt wherein said working process is any known process, such as, for example injection molding, blow molding, extrusion, coextrusion, compression molding, vacuum forming, thermoforming or foaming. All of these processes are collectively referred to herein as "forming".

The term "starch" as used herein includes chemically substantially non-modified starches as for example carbohydrates of natural, vegetable origin, composed mainly of amylose and/or amylopectin. They can be extracted from various plants, examples being potatoes, rice, tapioca, corn (maize), pea, and cereals such as rye, oats and wheat. Preferred is starch made from potatoes, corn, wheat or rice. Mixtures of starches obtained from these sources are contemplated. It further includes physically modified starches such as gelatinized or cooked starches, starches with a modified acid value (pH), e.g. where acid has been added to lower their acid value to a range of about 3 to about 6. Further included are starches, e.g. potato starch, in which the divalent ions like $Ca^{+2}$ or $Mg^{+2}$-ions associated with the phosphate groups have been partially or completely washed out from the starch or optionally wherein the ions present in the starch have been replaced partially or wholly by the same or different mono- of polyvalent ions. It further includes pre-extruded starches, as described in the above-referenced European Patent Application No. 89811046.6 (Publication No. 326,517).

As described above, it has been found that starches, e.g. with a water content within the range of about 5 to about 40 % by weight based on the weight of the composition, undergo a specific narrow endothermic transition on heating to elevated temperatures and in a closed volume just prior to the endotherm change characteristic of oxidative and thermal degradation. The specific endothermic transition can be determined by differential scanning calorimetric analysis (DSC) and is indicated on the DSC-diagram by a specific relatively narrow peak just prior to the endotherm characteristic of oxidative and thermal degradation. The peak disappears as soon as the mentioned specific endothermic transition has been undergone. The term "starch" includes also treated starches wherein said specific endothermic transition has been undergone. Such starch is described in the European Patent Application No. 89810046.6 (Publication No. 326,517).

Although at the current time, destructurization of starch requires the presence of water in ranges disclosed herein, the present inventive compositions also contemplate the use of destructurized starch prepared by other methods, e.g. without the use of water.

The water content of such a starch/water composition is preferably about 5 to about 40 % water by weight of the starch/water component and preferably about 5 to about 30 %. However, in order to work with the material near its equilibrium water content to which it gets when it is finally exposed to the free atmosphere, a water content of about 10 to about 22 %, preferably of about 14 to about 18 % by weight calculated based on the starch/water component should be used in processing and is preferred.

The compounds of component b) are selected from the group consisting of anionically modified polysaccharides.

Polysaccharides and anionically modified polysaccharides are known and are described e.g. in Encyclopaedia of Polymer Science and Technology, 2nd Edition, 1987.

Polysaccharides are defined as natural occurring carbohydrate polymers in which monosaccharide units are linked directly through glycosidic linkages. Polysaccharides are originating from the plant-, animal-and microbial kingdoms. The preferred polysaccharides are the different starches, celluloses, hemicelluloses, xylanes, gums, alginates, pectins and pullulans. The most preferred are starch and cellulose.

Anionically modified polysaccharides are chemically modified polysaccharides in which a part or all of the functional hydroxyl groups of the polysaccharide have been substituted by other groups which contain anionic functional groups.

Such anionic functional groups are known and are preferably selected from the group consisting of phosphate, phosphonate, sulfate, sulfonate, carboxylate groups in form of their free acids or as salts thereof. Such salt is preferably an alkali metal salt or an organic base salt. Such acid groups may be partially esterified.

It is possible to co-substitute such polysaccharides containing said anionic groups with further substituents. Such co-substituted compounds are within the scope of the present invention.

Example of such further substituents are hydroxyalkyl, preferably hydroxyethyl or hydroxylpropyl and/or alkyl ether preferably methyl ether or ethyl ether, preferred are alkyl ethers.

The average number of hydroxyl groups per anhydro glucose unit which are substituted by a residue

containing an anionic group is called the "degree of substitution" (DS). The maximum value is 3.0.

For the present invention the degree of substitution is preferably from about 0.01 to about 2.9 and more preferably from about 0.01 to about 2.5. Most preferred is a value from about 0.05 to about 1.0.

Preferred are polysaccharides which are substituted by phosphate groups, sulfate groups or carboxyl groups in the form of free acids or salts thereof. Preferred are polysaccharides substituted by phosphate groups or carboxyl groups in the form of their free acids or salts thereof.

Such substituents are hereinbelow exemplified as starch derivatives and stand generally for polysaccharide derivatives as follows:

Monostarch phosphates

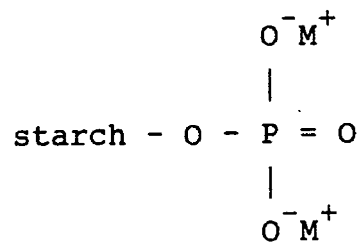

with $M^+ = H^+$, an alkali metal cation, $NH_4^+$, an organic cation, such as pyridinium, trimethyl ammonium, triethyl ammonium,
D.S. = 0.01 - 2.0.

Distarch phosphates

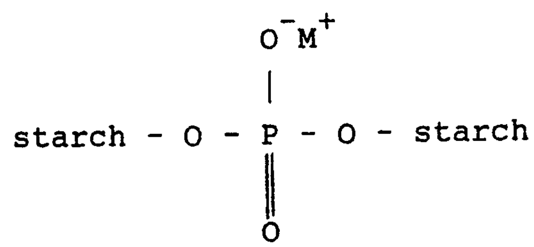

with $M^+ = H^+$, an alkali metal cation, $NH_4^+$, an organic cation such as pyridinium, trimethyl ammonium, triethyl ammonium,
D.S. = 0.01 - 1.0.

Monostarch alkanephosphonates

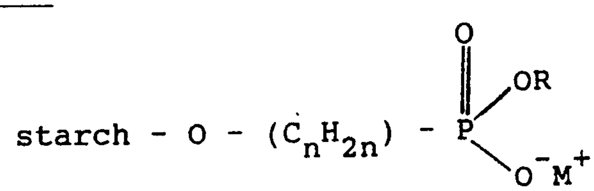

R = $H^+$, $CH_3$, $C_2H_5$, $C_3H_7$ or $M^+$
M = $H^+$, an alkali metal ion, $NH_4^+$, an organic cation such as pyridinium, trimethyl ammonium, triethyl ammonium,
n = 2 - 5,
D.S. = 0.01 - 2.0.

Monostarch sulfates

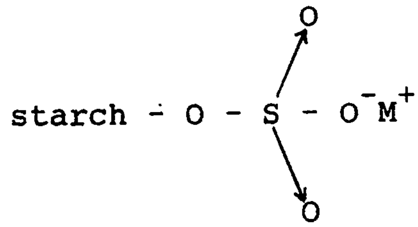

with $M^+ = H^+$, alkali metal cation, $NH_4^+$, organic cation such as pyridinium, trimethyl ammonium, triethyl ammonium
D.S. = 0.02 - 2.0
Carboxyalkyl starch

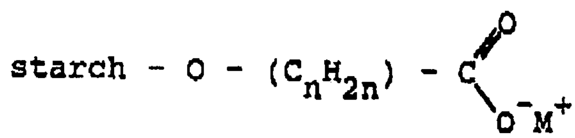

$M^+ = H^+$, an alkali metal ion, $NH_4^+$, an organic cation such as pyridinium, trimethyl ammonium, triethyl ammonium,
n = 1 - 5.
D.S. = 0.01 - 2.0.
starch dicarboxyalkyl hemi-esters

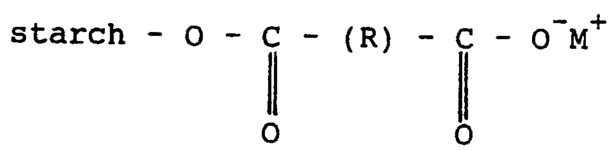

R = - $(C_nH_{2n})$ or - CH = CH-,
n = 2 - 5,
$M^+ = H^+$, an alkali metal ion, $NH_4^+$, an organic cation such as pyridinium, trimethyl ammonium, triethyl ammonium,
D.S. = 0.01 - 1.5.
Monostarch sulfosuccinate hemi-ester

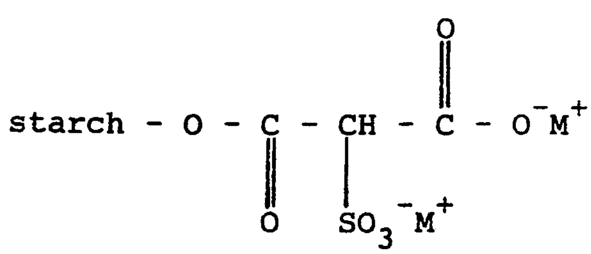

with $M^+ = H^+$, an alkali metal cation, $NH_4^+$, an organic cation such as pyridinium, trimethyl ammonium, triethyl ammonium,
D.S. = 0.001 - 1.0.

The Examples given above stand, as mentioned, generally for polysaccharide derivatives. Preferred derivatives are those from celluloses and from starch. Preferred further are those containing carboxyl groups, e.g. carboxymethyl cellulose or carboxylmethyl starch with different degrees of substitution.

Preferred are the groups in their salt form.

As mentioned above, the polymer composition comprising the components a) and b) optionally contains one or more substantially water insoluble hydrophobic polymers (component c), as well as further additives.

The component c) is a substantially water-insoluble polymer or a mixture of such substantially water-insoluble polymers. Component c) is preferably present in an amount effective to enhance the physical properties of articles made from the composition of the invention (which amount is sometimes referred to herein as an "effective amount" of component c)), for example increase of dimensional stability of final products made therefrom or adjust the degree of biodegradability.

As used herein a "substantially water-insoluble thermoplastic polymer" is a polymer which preferably absorbs less than 10 %, preferably less than 5 % of water per 100 grams of the polymer at room temperature and preferably at a rate of less than 2 % per 100 grams of the polymer at room temperature.

Examples of substantially water-insoluble thermoplastic materials are polyolefines, such as polyethylene (PE), polyisobutylenes, polypropylenes; vinyl polymers such as poly(vinyl acetates); polystyrenes; polyacrylonitriles (PAN); essentially water-insoluble polyacrylates or polymethacrylates; polyacetals; thermoplastic polycondensates such as polyamides (PA), polyesters, polyurethanes, polycarbonates, poly(alkylene terephthalates); polyarylethers and thermoplastic polyimides; and high molar-mass, essentially water-insoluble or crystallizable poly(alkylene oxides) such as polymers or copolymers of ethylene oxide and propylene oxide.

Further included are substantially water-insoluble thermoplastic copolymers known such as alkylene/vinyl ester-copolymers preferably ethylene/vinyl acetate-copolymers (EVA); ethylene/vinyl alcohol-copolymers (EVAL); alkylene/acrylates or methacrylate copolymers preferably ethylene/acrylic acid copolymers (EAA); ethylene/ethyl acrylate-copolymers (EEA); ethylene/methyl acrylate-copolymers (EMA); ABS-copolymers; styrene/acrylonitrile-copolymers (SAN); alkylene/maleic anhydride copolymers, preferably ethylene/maleic anhydride copolymer, acrylic acid esters/acrylonitrile copolymers; acrylamide/acrylonitrile copolymers; block copolymers of amide-ethers, amide-esters; block copolymers of urethane-ethers, urethane-esters; as well as mixtures thereof.

Preferred from these are those which undergo melt formation at a set processing temperature preferably within the range of about 95 °C to about 260 °C, more preferably within the range of about 95 °C to about 220 °C and most preferably within the range of about 95 °C to about 190 °C.

Also preferred are those polymers containing polar groups such as ether, amide, or urethane groups. Such polymers include e.g. copolymers of ethylene, propylene or isobutylene with vinyl compounds such as styrene/acrylonitrile-copolymers (SAN); block copolymers of amide-ethers, amide-esters; block copolymers of urethane-ethers, urethane-esters; as well as their mixtures.

Such substantially water-insoluble thermoplastic polymers may be added in any desired amount as described herein.

Acid groups such as carboxyl groups and hydroxyl groups such as hydroxymethyl, hydroxypropyl or vinyl alcohol groups may react together prior or during processing. It is therefore a precaution that carboxyl groups and hydroxyl groups which may react together to the disadvantage of the blend system are absent. However, this does not necessarily always happen and such useful combinations, which for the person skilled in the art are a matter of system optimization, are included within the scope of the present invention.

Such polymers may be used in any known form. Their molecular weight is also generally known in the art. It is also possible to use such polymers of relatively low molecular weight (oligomers). The choice of a particular molecular weight range is a matter of optimization and routine experimentation known to the one skilled in the art.

In the composition according to this invention, the two components a) and b) or the three components a), b) and c) always add up to 100 % and the values of the components given in percent hereinbelow refer to the sum of 100 %.

The ratio of destructurized starch to component b) and optionally to the sum of components b) and c) can be 1:99 to 99:1. It is however preferred that the destructurized starch contributes noticeably to the properties of the final material. Therefore, it is preferred that the destructurized starch is present in an amount of at least about 20 %, more preferably about 50 % and most preferably in the range of about 70 % to about 99 % by weight of the entire composition. That is, component b) is and optionally the sum of the components b) and c) are present in amounts of about 80 % or less, more preferably less than or equal to about 50 % and most preferably in the range of about 30 % to about 1 % by weight of the entire composition.

Component b) is a relatively polar material. When it functions in the present compositions in combination with component c), it is able to mix more readily with a more polar component c) than with a less polar one. Accordingly, with more polar components c), relatively less of component b) will be required than with less polar ones. The skilled worker will be able to select appropriate ratios of components b) and c) to obtain a substantially homogenous melt composition.

Compositions comprizing 1 to about 15 % by weight of components b) or optionally of the sum of

components b) and c) and about 99 to about 85 % of destructurized starch show a significant improvement in the properties of the obtained materials. For certain applications the preferred ratio of component b) or the sum of the components b) and c) to the destructurized starch component of about 1 to about 10 % to about 99 to about 90 % by weight of the total composition. If the destructurized starch contains water, the percentage of destructurized starch component present is meant to include the weight of water.

The starch may be mixed prior to destructurization with additives as named hereinbelow to yield a free flowing powder useful for continuous processing and is destructurized and granulated before it is mixed with components b) or b) and c) and or the other optionally added components. The other components to be added are preferably granulated to granular size equal to that of the granulated destructurized starch.

However, it is possible to process native starch or pre-extruded and/or destructurized granulated or powdered starch together with powdered or granulated additives and/or the polymeric material in any desired mixture or sequence.

Thus, it is preferred that components a), b) and c) as well as other conventional additives be mixed in a standard mixer. This mixture can then be passed through an extruder to produce granulates or pellets as one form of shaped articles which are also useful as starting material for processing into other articles. However, it is possible to avoid granulating and to process the obtained melt directly using down-stream equipment to produce films, blown films included, sheets, profiles, pipes, tubes, foams or other shaped articles. The sheets can be used for thermoforming.

It is preferred that fillers, lubricants and/or plasticizers be added to the starch before destructurization. However, the addition of the coloring agents as well as of components b), c) and additives other than the aforementioned can be added before, during or after destructurization.

The substantially destructurized starch/water component or granules have a preferred water content in the range of about 10 to about 22 % by weight of the starch/water component, more preferably about 12 to about 19 % and most preferably about 14 to about 18 % by weight of the starch/water component.

The water content described above refers to the percentage of water relative to the weight of the starch/water component within the total composition and not to the weight of the total composition itself, which would include also the weight of any added substantially water-insoluble thermoplastic polymer.

In order to destructurize the starch and/or to form a melt of the new polymeric composition according to this invention, it is suitably heated in a screw and barrel of an extruder for a time long enough to effectuate destructurization and melt formation. The temperature is preferably within the range of 105 °C to 240 °C, more preferably within the range of 130 °C to 190 °C depending on the type of starch used. For this destructurization and melt formation, the composition is heated in a closed volume. A closed volume can be a closed vessel or the volume created by the sealing action of the unmolten feed material as happens in the screw and barrel of injection molding or extrusion equipment. In this sense the screw and barrel of an injection molding machine or an extruder is to be understood as being a closed vessel. Pressures created in a closed vessel correspond to the vapour pressure of water at the used temperature but of course additional pressure may be applied and/or generated as normally occurs in a screw and barrel. The preferred applied and/or generated pressures are in the range of pressures which occur in extrusion and are known per se , e.g. from 5 to 150 x $10^5$ N/m$^2$ preferably from 5 to 75 x $10^5$ N/m$^2$ and most particularly from 5 to 50 x $10^5$ N/m$^2$ If the thus-obtained composition is comprised only of destructurized starch, it may be granulated and ready to be mixed with the further components according to a chosen mixing and processing procedure to obtain the granular mixture of the destructurized starch/polymer starting material to be fed to the screw barrel.

However, the obtained melt in the screw and barrel may be injection molded directly into a suitable mold, i.e. directly further processed to a final product if all necessary components are already present.

Within the screw, the granular mixture obtained as described above is heated to a temperature which is generally within the range of about 80 °C to about 240 °C, preferably within the range of about 120 °C to about 220 °C more preferably within the range of about 130 °C to about 190 °C. Preferably, such mixture is heated to a sufficiently high temperature and for a time long enough until the endothermic transition analysis (DSC) indicates that the specific relatively narrow peak just prior to the endotherm characteristic of oxidative and thermal degradation of starch has disappeared.

The minimum pressures under which the melts are formed correspond to the water vapour pressures produced at said temperatures. The process is carried out in a closed volume as explained above, i.e. in the range of the pressures which occur in extrusion or molding processes and known per se, e.g. from zero to 150 x $10^5$ N/m$^2$ preferably from zero to 75 x $10^5$ N/m$^2$ and most particularly from zero to 50 x $10^5$ N/m$^2$

When forming a shaped article by extrusion the pressures are preferably as mentioned above. If the melt according to this invention is, e.g., injection molded, the normal range of injection pressures used in injection molding is applied, e.g. from 300 x $10^5$ N/m$^2$ to 3000 x $10^5$ N/m$^2$ and preferably from 700 x $10^5$ to

$2200 \times 10^5$ N/m$^2$.

Accordingly, the present invention provides a thermoplastic destructurized-starch substantially homogenous melt formed by the process comprising:

1) providing a mixture comprising starch and at least one compound selected from the group consisting of anionically modified polysaccharides

2) heating said mixture in a closed volume under sufficient temperature and pressure for a time long enough to effectuate destructurization of said starch and form said melt.

The present invention also provides a thermoplastic destructurized-starch product having substantial dimensional stability formed by the process comprising:

1) providing a mixture comprising starch and at least one compound selected from the group consisting of anionically modified polysaccharides (component b);

2) heating said mixture in a closed volume under sufficient temperature and pressure for a time long enough to effectuate destructurization of said starch and form a substantially homogenous melt;

3) shaping said melt into an article; and

4) allowing said shaped article to cool to a substantially dimensionally stable thermoplastic product.

The mixture provided in step 1) of either above-described processes may additionally contain component c) and additives as described herein.

Various hydrophilic polymers may be used as additives. These include water soluble and water-swellable polymers. As such it includes animal gelatin, vegetable gelatins; proteins such as sunflower protein, soybean proteins, cotton seed proteins, peanut proteins, rape seed proteins, acrylated proteins; water-soluble polysaccharides, alkyl celluloses, methyl cellulose, cellulose esters such as cellulose acetylphtalate analogous known polymers made from starch; water-soluble or water-swellable synthetic polymers such as polyacrylates, polymethacrylates, shellac and other similar polymers.

Such hydrophilic polymers may optionally be added up to about 50 % based on the starch/water component, preferably up to about 30 % and most preferably between about 5 % and about 20 % based on the starch/water component. If any hydrophilic polymer is added, its mass should be considered along with the starch in determining the appropriate amount of water in the composition.

Other useful additives may be e.g. adjuvants, fillers, lubricants, mold release agents, plasticizers, foaming agents, stabilizers, coloring agents, pigments, extenders, chemical modifiers, flow accelerators, and mixtures thereof.

Examples for fillers are inorganic fillers, such as the oxides of magnesium, aluminum, silicon, titanium, etc. preferably in a concentration in the range of about 0.02 to about 50 % by weight preferably about 0.20 to about 20 % based on the total weight of all the components.

Examples for lubricants are stearates of aluminum, calcium, magnesium and tin as well as talc, silicones, etc. which may be present in concentrations of about 0.1 to about 5 % preferably at about 0.1 to about 3 % based upon the weight of the total composition.

Examples of plasticizers include low molecular poly(alkylene oxides), such as poly(ethylene glycols), poly(propylene glycols), poly(ethylene-propylene glycols); organic plasticizers of low molar masses, such as glycerol, pentaerythritol, glycerol monoacetate, diacetate or triacetate; propylene glycol, sorbitol, sodium diethylsulfosuccinate, etc., added in concentrations ranging from about 0.5 to about 15 %, preferably ranging from about 0.5 to about 5 % based on the total weight of all the components. Examples of colouring agents include known azo dyes, organic or inorganic pigments, or colouring agents of natural origin. Inorganic pigments are preferred, such as the oxides of iron or titanium, these oxides, known per se, being added in concentrations ranging from about 0.001 to about 10 %, preferably about 0.5 to about 3 %, based on the weight of all the components.

There may further be added compounds to improve the flow properties of the starch material such as animal or vegetable fats, preferably in their hydrogenated form, especially those which are solid at room temperature. These fats have preferably a melting point of 50 °C or higher. Preferred are triglycerides of $C_{12}$ -, $C_{14}$ -, $C_{16}$-, and $C_{18}$ - fatty acids.

These fats can be added alone without adding extenders or plasticizers.

These fats can advantageously be added alone or together with mono- and/or diglycerides or phosphatides, especially lecithin. The mono- and diglycerides are preferably derived from the types of fats described above, i.e. from $C_{12}$ -, $C_{14}$ -, $C_{16}$ -, and $C_{18}$ - fatty acids.

The total amount of fats, mono-, diglycerides and/or lecithins used are up to about 5 % and preferably within the range of about 0.5 to about 2 % by weight of the total weight of starch and any added hydrophilic polymer.

The materials may further contain stabilizers, such as antioxydants, e.g. thiobisphenols, alkylidenbisphenols secondary aromatic amines; light stabilizers such as UV-absorbers and UV-quenchers;

hydroperoxide decomposer; free-radical scavengers; stabilizers against microorganisms.

The compositions of the invention form thermoplastic melts on heating and in a closed volume, i.e. under conditions of controlled water-content and pressure. Such melts can be processed just like conventional thermoplastic materials, using, for example, conventional apparatus for injection molding, blow molding, extrusion and coextrusion (rod, pipe and film extrusion), compression molding, foaming, to produce known articles. The articles include bottles, sheets, films, packaging materials, pipes, rods, laminated films, sacks, bags, pharmaceutical capsules, granules, powders or foams.

For example, these compositions may be used to prepare low density packaging materials (e.g. foams) by well-known methods. Conventional blowing agents may be utilized if desired or, for certain compositions, the water itself may act as the blowing agent. Open cell and closed cell foams may be produced as desired by varying the composition and processing condtions. These foams produced from the present compositions will demonstrate improved properties (e.g., dimensional stability, moisture resistance, etc.) when compared with foams made of starch without incorporation of the components b) and c) according to this invention.

These compositions may be used as carrier materials for active substances, and may be mixed with active ingredients such as pharmaceuticals and/or agriculturally active compounds such as insecticides or pesticides for subsequent release applications of these ingredients. The resulting extruded materials can be granulated or worked to fine powders.

The following examples are provided to further explain and exemplify the invention but not to limit the scope thereof, which scope is defined by the appended claims.

Example 1

(a) 4000 g of potato starch containing 15.1 % water are placed in a high speed mixer and 1700 g of cellulose monophosphate, sodium salt, D.S.: 0.23 (component b) sold by Fluka, 3400 g of polyethylene-co-vinyl acetate containing 80 mole % ethylene and 20 mole % vinyl acetate (Escorene UL02020 of Exxon); 34 g of hydrogenated fat (lubricant release agent) sold as Boeson VP by Boehringer Ingelheim, 17 g of a melt flow accelerator (lecithin) sold as Metarin P by Lucas Meyer are added under stirring. The water content of the final mixture is 6.6 %.

(b) 8000 g of the mixture prepared under (a) are fed through a hopper into a Werner & Pfleiderer co rotating twin screw extruder (model Continua 37).

The temperature profile of the four sections of the barrel is respectively 20 °C/ 50 °C/ 100 °C/ 80 °C.

Extrusion is carried out with a mixture output of 8.4 kg/hr (screw speed 200 rpm). Water is added at the inlet with a flow rate of 1.4 kg/hr. The water content of the material during extrusion is therefore 20.5 %. In the last section of the extruder 200 mbar reduced pressure is applied to remove part of the water as water vapour.

The water content of the granulates is 10.2 % as measured after they have equilibrated at room temperature. They are remoistered at 17 % $H_2O$ by spraying water under stirring in a conventional mixer.

(c) The granulates of the pre-blended mixture as obtained under (b) ($H_2O$ content: 17 %) are fed through a hopper to an injection molding machine Arburg 329-210-750 for the production of tensile test pieces. The temperature profile of the barrel is: 90 °C/ 165 °C/ 165 °C/ 165 °C.

The shot weight is 7 g, the residence time 450 sec., the injection pressure 1280 bar, the back pressure 80 bar, the screw speed 180 rpm.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on a Zwick tensile test apparatus.

The samples are measured at room temperature using an extension rate of 10 mm per minute. Results are presented in Table 1 and compared with those of the tensile test pieces obtained from the same starch processed in a similar way but in absence of components b) and c).

Table 1

| | unblended starch | Example Nos. | | | | | |
|---|---|---|---|---|---|---|---|
| | | 1 | 3 | 4 | 5 | 6 | 7 |
| break strain % | 22 | 26 | 30 | 68 | 530 | 34 | 30 |
| break energy kJ/m$^2$ | 325 | 350 | 420 | 750 | 1800 | 445 | 395 |

Of course different blend compositions show different values for the physical parameters indicated. To obtain the best values is a matter of optimization by varying the concentration of the different components, which is no problem to the expert in the art.

Example 1 is repeated with the following blends as per the Examples 2 to 8 whereby analogous results as given in Table 1 are obtained.

## Example 2

Example 1 is repeated except that the ratio of the components is varied as given in Table 2. For comparison perspective, Example 1 is shown as Blend No. 1.

Table 2

| Blend No. | starch: component b)+c) | component b): component c) |
|---|---|---|
| | (weight ratio) | (weight ratio) |
| 2 | 50 : 50 | 100 : 0 |
| 3 | 60 : 40 | 99 : 1 |
| 4 | 70 : 30 | 50 : 1 |
| 5 | 80 : 20 | 20 : 1 |
| Ex.1 | 91.5: 8.5 | 10 : 1 |
| 6 | 90 : 10 | 1 : 1 |
| 7 | 94 : 6 | 1 : 10 |
| 8 | 98 : 2 | 1 : 50 |
| 9 | 99 : 1 | 1 : 99 |

The resulting injection molded polymers are tougher and more resistant to humid air than the unmodified starch polymer. The toughness as judged by resistance to breaking upon bending increases from blend 9 to blend 2 in concert with the combined increase in cellulose phosphate content. While the resistance to softening in humid atmosphere is improved in all cases relative to unmodified starch, the resistance of blends 1,4,5 and 6 are particularly good. These results illustrate the unexpected combinations as benefits in performance.

## Example 3

(a) 8900 g of potato starch containing 15 % water are placed in a high speed mixer and 765 g of carboxymethyl starch (component b) sold as Retabond AC-1 by Avebe; 85 g of polyethylene-co-vinyl alcohol containing 68 mole % vinyl alcohol and 32 mole % ethylene (Eval EP-F-101 of Kuraray); 85 g of polymethylacrylate sold as Degalan G-6 by Degussa; 75.6 g of hydrogenated fat (lubricant release agent) sold as Boeson VP by Boehringer Ingelheim, 38 g of a melt flow accelerator (lecithin) sold as Metarin P by Lucas Meyer are added under stirring. The water content of the final mixture is 13.4 %.

(b) 9000g of the mixture prepared under (a) are fed through a hopper into a Werner & Pfleiderer co-

rotating twin screw extruder (model Continua 37).

The temperature profile of the four sections of the barrel is respectively 20 °C/ 80 °C/ 200 °C/ 140 °C.

Extrusion is carried out with a mixture output of 8.4 kg/hr (screw speed 200 rpm). Water is added at the inlet with a flow rate of 3.2 kg/hr. The water content of the material during extrusion is therefore 33 %. In the last section of the extruder 450 mbar reduced pressure is applied to remove part of the water as water vapour.

The water content of the granulates is 17.2 % as measured after they have equilibrated at room temperature.

(c) The granulates of the pre-blended mixture as obtained under (b) ($H_2O$ content: 17.2 %) are fed through a hopper to an injection molding machine Arburg 329-210-750 for the production of tensile test pieces. The temperature profile of the barrel is: 90 °C/ 175 °C/ 175 °C/ 175 °C.

The shot weight is 8.0 g, the residence time 450 sec., the injection pressure 1920 bar, the back pressure 80 bar, the screw speed 180 rpm.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on a Zwick tensile tet apparatus as given in Example 1.

Results are presented in Table 1.

Example 4

(a) 5000 g of potato starch containing 15.1% water are placed in a high speed mixer and 1275 g of carboxymethyl starch (component b) sold as Retabond AC-1 by Avebe; 2975 g of polyethylene-co-vinyl alcohol (component c)) containing 68 mole % vinyl alcohol and 32 mole % ethylene) sold as Eval EP-F-101 by Kuraray. 42.5 g of hydrogenated fat (lubricant/release agent) Boeson VP and 21.25 g of a melt flow accelerator (lecithin/Metarin P) are added under stirring. The water content of the final mixture is 8.1 %.

(b) 9000 g of the mixture prepared under (a) are fed through a hopper into the same twin-screw co-rotating extruder described in Example 1. The extrusion of the mixture is carried out with the following temperature profile: 20 °C/ 80 °C/200 °C/120 °C. The other parameters of the extrusion experiment are the following:

material output: 9.6 kg/hr
screw speed: 200 rpm
water added: 2.5 kg/hr
reduced pressure (last section) 50 mbar
water-content during extrusion: 28.1 %

The water content of the granulates is 9.6 % as measured after they have equilibrated at room temperature. They are brought to a water content of 17 % by spraying water under stirring in a conventional mixer.

(c) The granulates obtained under (b) are processed using the same injection molding machine described in (c) of Example 1. The temperature profile of the barrel is 90 °C/ 175 °C/ 175 °C/ 175 °C. The other processing parameters are:

shot weight: 7.5 g
residence time: 450 sec.
injection pressure; 1925 bar
back pressure: 80 bar
screw speed: 180 rpm

The tensile test pieces thus produced are conditioned and tested on a Zwick tensile test apparatus as described in (d) of Example 1.

Results are presented in Table 1.

Example 5

(a) 2100 g of potato starch containing 15.3 % water are placed in a high speed mixer and 765 g of starch phosphate (component b) sold as Retamyl AP by Avebe; 5950 g of polyamide-block-polyether (component c) sold as Pebax MA-4011 by Atochem; 17.9 g of hydrogenated fat (lubricant/ release agent)

Boeson VP; 9 g of a melt flow accelerator (lecithin) Metarin P are added under stirring. The water content of the final mixture is 3.6 %.

(b) 8000 g of the mixture prepared under (a) are fed through a hopper into the same twin-screw co-rotating extruder described in Example 1.

The extrusion of the mixture is carried out with the following processing parameters:

temperature profile: 20 °C/ 80 °C/ 220 °C/ 180 °C
material output: 8 kg/hr
screw speed: 200 rpm
water added: 1 kg/hr
reduced pressure (last section): 800 mbar
water content during extrusion: 29.14 %

The water content of the granulates is 5.3 % after they have equilibrated at room temperature. They are brought to a water content of 17 % by spraying water under stirring in a conventional mixer.

(c) The granulates of (b) are processed using the same injection molding machine of Example 1. The processing parameters are the following:

temperature profile: 90 °C/ 165 °C/ 165 °C/ 165 °C
shot weight: 6.7 g
residence time; 450 sec
injection molding: 1210 bar
back pressure; 80 bar
screw speed: 180 rpm

The tensile test pieces thus produced are conditioned and tested on a Zwick tensile test apparatus described in (d) of Example 1.

Results are presented in Table 1.

Example 6

(a) 8000 g of potato starch containing 15.1 % water are placed in a high speed mixer and 340 g of starch phosphate sold as Retamyl AP by Avebe (component b); 680 g of thermoplastic polyamide elastomer sold as Pebax MA 4011 by Atochem; 680 g of a thermoplastic elastomer polyurethane block polyether (component c) sold as Pellethane 2103-80-AE by Dow Chemical Company; 68 g of hydrogenated fat (lubricant/ release agent) Boeson VP; 34 g of a melt flow accelerator (lecithin) Metarin P are added under stirring. The water content of the final mixture is 12.3 %.

(b) 9000 g of the mixture prepared under (a) are fed through a hopper into the same twin-screw co-rotating extruder described in Example 1.

The extrusion of the mixture is carried out with the following processing temperature:

temperature profile: 20 °C/ 220 °C/ 220 °C/ 80 °C
material output: 8.4 kg/hr
screw speed: 200 rpm
water added: 2.1 kg/hr
reduced pressure (last section): 80 mbar
water content during extrusion: 28.9 %

The water content of the granulates is 16.9 % after they have equilibrated at room temperature.

(c) The granulates obtained under (b) are processed using the same injection molding machine described in (c) of Example 1. The processing parameters are the following:

temperature profile: 90 °C/ 175 °C/ 175 °C/ 175 °C
shot weight: 7.8 g
residence time; 450 sec
injection molding: 2100 bar
back pressure; 80 bar
screw speed: 180 rpm

The tensile test pieces thus produced are conditioned and tested on a Zwick tensile test apparatus described in (d) of Example 1.

Results are presented in Table 1.

Example 7

(a) 7000 g of potato starch containing 15.1 % water are placed in a high speed mixer and 1700 g of starch phosphate (component b), sold as Retamyl AP by Avebe; 425 g of polyamide block polyether thermoplastic elastomer polyurethane (component c) sold as Pebax MA-4011 by Atochem; 425 g of polyurethane-block-polyether thermoplastic elastomer (component c) sold as Pellethane 2103-80-AE by Dow Chemical Company; 60 g of hydrogenated fat (lubricant/ release agent) Boeson VP; 30 g of a melt flow accelerator (lecithin) Metarin P are added under stirring. The water content of the final mixture is 13.2 %.

(b) 9000 g of the mixture prepared under (a) are fed through a hopper into the same twin-screw co-rotating extruder described in Example 1.

The extrusion of the mixture is carried out with the following processing parameters:

temperature profile: 20 °C/ 220 °C/ 220 °C/ 80 °C
material output: 8.4 kg/hr
screw speed: 200 rpm
water added: 2.1 kg/hr
reduced pressure (last section): 600 mbar
water content during extrusion: 29.6 %

The water content of the granulates is 17.3 % after they have equilibrated at room temperature.

(c) The granulates obtained under (b) are processed using the same injection molding machine described in (c) of Example 1. The processing parameters are the following:

temperature profile: 90 °C/ 165 °C/ 165 °C/ 165 °C
shot weight: 8 g
residence time; 450 sec
injection molding: 1760 bar
back pressure; 80 bar
screw speed: 180 rpm

The tensile test pieces thus produced are conditioned and tested on a Zwick tensile test apparatus described in (d) of Example 1.

Results are presented in Table 1.

## Example 8

Example 1 is repeated by replacing component c) with poly(vinyl alcohol-co-vinyl acetate) containing 87 - 89 mole % of vinyl alcohol and 11 - 13 mole % of vinyl acetate, sold as Airvol 540 S by Air Products.

The resulting injection molded polymer blend is tougher and more resistant to humid air than unblended starch.

## Example 9

Example 1 (sections a) and b)) is repeated except that the water content is adjusted to 22 %, and the cutter is removed from the die face. A continuous extrudate is obtained which is foamed as a result of the excess water evaporation. The foam is chopped into 30-40 mm lengths and is useful as a loose-fill, packaging insulation material.

## Example 10

During each of the injection molding operations in Examples 1 - 8 an experiment is preformed to demonstrate the utility of making foams. The molten material is obtained as described in Example 1, Sections a), b) and c) in each case is extruded into the open atmosphere (Section c) instead of being injection molded into a closed mold. In every case the material is converted into a foamed extrudate useful for loose-fill in packaging applications.

## Example 11

The granulates from Example 1 are mixed with polystyrene in the proportion of 30 to 70 parts by weight and are treated according to Example 10. The resulting foamed extrudate contains a very fine and uniform

cell structure suitable for a variety of uses including structural foam.

## Claims

1. A composition of matter capable of being formed into articles having substantial dimensional stability comprising
   a) destructurized starch, and
   b) at least one compound selected from the group consisting of anionically modified polysaccharides; said modified polysaccharide being present in an amount effective to enhance the physical properties of said articles.
2. A composition according to claim 1 wherein said anionically modified polysaccharide is selected from the group consisting of starches, celluloses, hemicelluloses, xylanes, gums, alginates, pectins and pullulans.
3. A composition according to claim 2 wherein said anionically modified polysaccharide is selected from starch and/or cellulose.
4. A composition according to anyone of the claims 1 to 3 wherein said anionically modified polysaccharides are substituted by phosphate groups, sulfate groups or carboxyl groups in the form of free acids or salts thereof.
5. A composition according to claim 4 wherein the anionically modified polysaccharide carries sulfate groups.
6. A composition according to claim 4 wherein the anionically modified polysaccharide carries sulfate groups in the form of an ammonium or alkali salt or organic base salt.
7. A composition according to claim 4 wherein the anionically modified polysaccharide carries carboxyl groups.
8. A composition according to claim 4 wherein the anionically modified polysaccharide carries carboxyl groups in the form of ammonium or alkali salts or organic base salt.
9. A composition according to anyone of the claims 1 to 8 wherein the anionically modified polysaccharide is co-substituted by hydroxyalkyl and/or by alkylether groups.
10. A composition according to anyone of the claims 1 to 9 wherein the degree of substitution of the anionically modified polysaccharide is from about 0.01 to about 2.9, preferably from about 0.01 to about 2.5 and most preferably from about 0.05 to about 1.5.
11. The composition according to anyone of the claims 1 to 10 wherein the weight % ratio of destructurized starch to component b) is about 1:99 to about 99:1.
12. The composition according to claim 11 wherein destructurized starch is present in amounts of about 50 % to about 99 % of the total composition.
13. The composition according to anyone of the claims 1 to 12 wherein the destructurized starch has a water content of about 5 % to about 40 % by weight of the total starch content, and preferably of about 10 % to about 22 % by weight of the total starch content.
14. The composition according to anyone of the claims 1 to 13 wherein there is additionally incorporated component c) comprising an substantially water-insoluble thermoplastic polymer which does not fall within the definition of those compounds defined as component b).
15. The composition according to claim 14 wherein said component c) is selected from the group consisting of polyolefines, vinyl polymers, polystyrenes, polyacrylonitriles, poly(vinyl carbazols), polyacrylates, polymethacrylates, polyacetals, thermoplastic polycondensates, polyarylethers, thermoplastic polyimides, essentially water-insoluble or crystallizable poly(alkylene oxides), and mixtures thereof.
16. The composition of claim 15 wherein component c) is selected from the group consisting of polyethylenes, polypropylenes, polyisobutylenes, poly(vinyl chlorides), polyvinyl acetates), polystyrenes; polyamides, polyesters, polyurethanes, polycarbonates, poly(alkylene terephthalates).
17. The composition according to claim 14 wherein component c) is selected from the group consisting of alkylene/vinyl ester-copolymers, alkylene/acrylate or methacrylate copolymers, ABS copolymers, styrene/acrylonitrile copolymers, alkylene/maleic anhydride copolymers, partially hydrolyzed polyacrylates or polymethacrylates, partially hydrolyzed copolymers or acrylates and methacrylates, acrylic acid esters/acrylonitrile copolymers and hydrolysates thereof, acrylamide/acrylonitrile copolymers, block copolymers of amide-ethers, amide-esters; block copolymers of urethane-esters and mixtures thereof.
18. The composition according to claim 17 wherein component c) is selected from the group consisting of ethylene/vinyl acetate copolymers (EVA), ethylene/vinyl alcohol copolymers (EVAL), ethylene/acrylic acid copolymers (EAA), ethylene/ethyl acrylate copolymers (EEA), ethylene/methacrylate copolymers (EMA), styrene/acrylonitrile copolymers (SAN), ethylene/maleic anhydride copolymers, block copolymers of amide-ethers, amide-esters; block copolymers of urethane-ethers, urethane-esters and mixtures thereof.

19. The composition according to claim 14 wherein the sum of components b) and c) constitute about 1 % to about 99 % by weight of the total composition.

20. The composition according to claim 19 wherein the sum of components b) and c) consitute about 20 % to about 80 % by weight of the total composition, and preferably about 1 % to about 30 % by weight of the total composition.

21. The composition according to anyone of the claims 1 to 20 wherein there are additionally incorporated one or more materials selected from the group consisting of adjuvants, fillers, lubricants, mold release agents, plasticizers, foaming agents, stabilizers, extenders, chemical modifiers, flow accelerators, coloring agents, pigments and mixtures thereof.

22. The composition according to anyone of the claims 1 to 21 further containing an agriculturally active compound.

23. The composition according to anyone of the claims 1 to 22 which is a melt blend.

24. The composition according to anyone of the claims 1 to 22 which is a cooled solidified blend.

25. The composition according to claim 24 in particulate, granulated or pelletized form.

26. A thermoplastic destructurized-starch product made from a composition according to anyone of the claims 1 to 22, 24 and 25 having substantial dimensional stability formed by the process comprising:

1) providing a mixture comprising starch and at least one compound selected from the group consisting of anionically modified polysaccharides,

2) heating said mixture in a closed volume under sufficient temperature and pressure for a time long enough to effectuate destructurization of said starch and form a substantially homogenous melt;

3) shaping said melt into an article; and

4) allowing said shaped article to cool to a substantially dimensionally stable thermoplastic product.

27. The product according to claim 26 wherein destructurization of the starch is carried out at a temperature above its melting point and glass transition temperature.

28. The product according to claim 26 or 27 wherein the destructurization of the starch is carried out at temperatures of about 105 °C to about 240 °C, preferably at temperatures of about 130 °C to about 190 °C.

29. The product according to claim 27 wherein the melt is formed under the range of pressure from the minimum pressure necessary to avoid formation of water vapour under the applied temperature up to about $150 \times 10^5$ $N/m^2$

30. The product according to claim 29 wherein the heat and pressure are maintained until the starch has undergone the specific narrow endothermic transition just prior to its endothermic change characteristic of oxidative and thermal degradation.

31. The product according to anyone of the claims 26 to 30 which is a granulate, a pellet or a powder.

32. The product according to claim 31 further melted and processed to form a shaped article selected from the group consisting of containers, bottles, pipes, rods, packaging material, sheets, foams, films, sacks, bags and pharmaceutical capsules.

33. The shaped articles according to claim 32 wherein the further melting and processing comprises foaming, filming, compression molding, injection molding, blow molding, extruding, co-extruding, vacuum forming, thermoforming and combinations thereof.

34. A thermoplastic destructurized-starch substantially homogenous melt made from a composition according to anyone of the claims 1 to 22, 24 and 25 formed by the process comprising:

1) providing a mixture comprising starch and at least one compound selected from the group consisting of anionically modified polysaccharides (component b); and

2) heating said mixture in a closed volume under sufficient temperature and pressure for a time long enough to destructurize said starch and form said melt.

35. The melt according to claim 34 wherein destructurization of the starch is carried out at a temperature of about 105 °C to about 240 °C, and preferably at a temperature of about 130 °C to about 190 °C.

36. The melt according to claim 35 wherein the melt is formed under the range of pressure from the minimum pressure necessary to avoid formation of water vapour under the applied temperature up to about $150 \times 10^5$ $N/m^2$

37. The melt according to claim 35 wherein the heat and pressure are maintained until the starch has undergone the specific narrow endothermic transition just prior to its endothermic change characteristic of oxidative and thermal degradation.